# EUROPEAN PATENT APPLICATION

(11) **EP 4 679 615 A1**
(43) Date of publication of application: **14.01.2026**
(21) Application number: 24770402.6
(22) Date of filing: 19.02.2024
(51) Int. Cl.: H01M 50/55, H01M 50/107, H01M 50/152, H01M 50/342, H01M 50/531, H01M 50/562, H01M 50/588, H01M 50/593

(54) **CYLINDRICAL BATTERY**

(30) Priority: 10.03.2023 JP 2023037109
(71) Applicant: Panasonic Energy Co., Ltd., Osaka 570-8511 (JP)
(72) Inventor: YAMAGUCHI, Yuma, Osaka 571-0057 (JP)
(74) Representative: Eisenführ Speiser
(86) International application number: PCT/JP2024/005696
(87) International publication number: WO 2024/190287

(57) **Abstract**

A cylindrical battery (10) serving as an example of an embodiment comprises: an electrode body including a first electrode and a second electrode; an outer casing (16) having a bottomed cylindrical shape and accommodating the electrode body; and a sealing body (17) that closes an opening of the outer casing (16), the first electrode being electrically connected to the sealing body (17), and the second electrode being electrically connected to the outer casing (16). The cylindrical battery (10) further comprises: a first conductive member (30) bonded to a surface of the sealing body (17) outward of the battery; a second conductive member (40) bonded to an opening edge portion of the outer casing (16); and an insulating member (50) coupling the first conductive member (30) and the second conductive member (40).

## Description

### TECHNICAL FIELD

The present disclosure relates to a cylindrical battery.

### BACKGROUND ART

Cylindrical batteries generally comprise a wound electrode assembly, a bottomed cylindrical outer housing can that houses the electrode assembly, and a sealing assembly that seals an opening portion of the outer housing can. A crimping portion in which an opening edge portion of the outer housing can is bent inward and which presses the sealing assembly via a gasket is formed in the outer housing can. Cylindrical batteries are characteristically highly resistant to shock and readily modularized, and in applications requiring large capacities, a plurality of cylindrical batteries are electrically connected to form a module. In this case, leads connecting the cylindrical batteries are joined to external terminals of the cylindrical batteries by laser welding or the like (for example, refer to Patent Literature 1).

In a cylindrical battery, for example, the sealing assembly acts as a positive electrode external terminal and the outer housing can acts as a negative electrode external terminal. Patent Literature 1 discloses an inter-battery connecting apparatus that connects a top surface of a sealing assembly of a first cylindrical battery and a can bottom of an outer housing can of a second cylindrical battery to each other. In some cases, a lead may be welded to a crimping portion of an outer housing can that is a negative electrode external terminal in proximity to a sealing assembly in the outer housing can (for example, refer to Patent Literature 2). In this case, since respective leads connected to the positive electrode external terminal and the negative electrode external terminal can be arranged on a side of one end in an axial direction of the cylindrical battery, for example, downsizing of a battery module can be achieved.

### CITATION LIST

### PATENT LITERATURE

PATENT LITERATURE 1: Japanese Unexamined Patent Application Publication No. 2006-251083
PATENT LITERATURE 2: Japanese Unexamined Patent Application Publication No. 2018-524793

### SUMMARY

When welding a lead to a crimping portion of an outer housing can during modularization of a cylindrical battery, it is not easy to stably ensure a favorable connection state of the lead. While the connection state of a lead can conceivably be stabilized by increasing a length of the crimping portion in a radial direction to increase a joining area, in this case, the sealing assembly is strongly compressed by the crimping portion and becomes susceptible to deformation. As a result, failures such as an increase in variation in operating pressure of a safety valve provided in the sealing assembly and instability of a connection position when connecting the lead to the sealing assembly may occur.

A cylindrical battery that is an aspect of the present disclosure comprises: an electrode assembly including a first electrode and a second electrode; a bottomed cylindrical outer housing can that houses the electrode assembly; and a sealing assembly that seals an opening portion of the outer housing can, wherein the first electrode is electrically connected to the sealing assembly and the second electrode is electrically connected to the outer housing can. The cylindrical battery further comprises: a first conductive member that is joined to a surface of the sealing assembly on an outward side of the battery; a second conductive member that is joined to an opening edge portion of the outer housing can; and an insulating member that couples the first conductive member and the second conductive member to each other.

The cylindrical battery according to the present disclosure achieves stable connection of a lead during modularization while suppressing deformation of a sealing assembly.

### BRIEF DESCRIPTION OF DRAWINGS

FIG. 1 is a sectional view of a cylindrical battery that is an example of an embodiment.
FIG. 2 is an enlarged view of a sealing assembly and a vicinity thereof of the cylindrical battery that is an example of the embodiment.
FIG. 3 is a plan view of the cylindrical battery that is an example of the embodiment.
FIG. 4 is a plan view of a cylindrical battery that is another example of the embodiment.

### DESCRIPTION OF EMBODIMENTS

Hereinafter, an example of an embodiment of a cylindrical battery according to the present disclosure will be described in detail with reference to the drawings. Note that cylindrical batteries according to the present disclosure are not limited to the embodiment described below. In addition, configurations created by selectively combining the plurality of embodiments and modifications described below are included in the present disclosure.

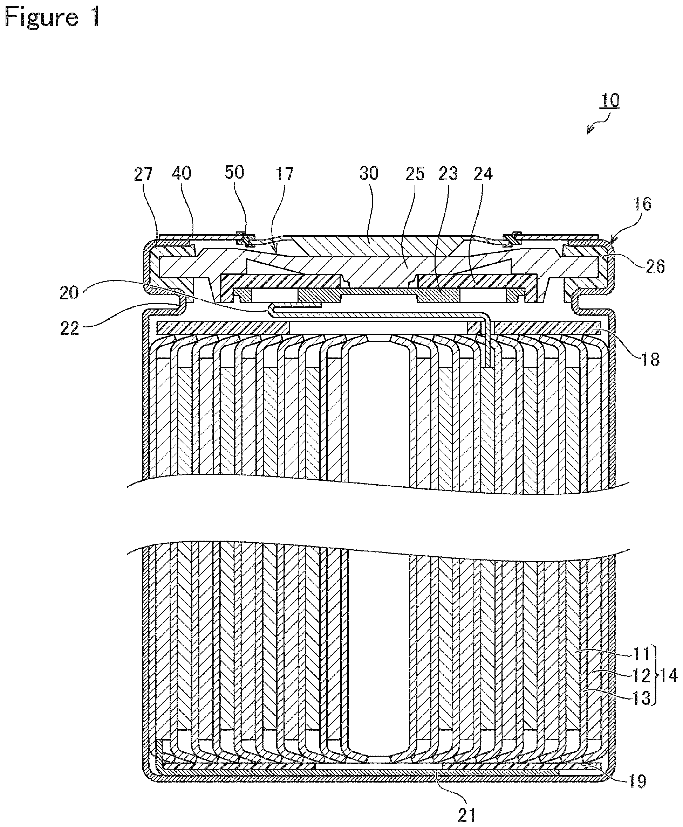

As shown in FIG. 1, a cylindrical battery 10 comprises an electrode assembly 14, a bottomed cylindrical outer housing can 16 that houses the electrode assembly 14, and a sealing assembly 17 that seals an opening portion of the outer housing can 16. The outer housing can 16 houses an electrolyte along with the electrode assembly 14. The outer housing can 16 has a grooved portion 22 formed on a side wall and the sealing assembly 17 seals the opening portion of the outer housing can 16 while being supported by the grooved portion 22. Hereinafter, a side of the sealing assembly 17 of the cylindrical battery 10 is considered to be up and a can bottom side of the outer housing can 16 is considered to be down for convenience of description.

Although details will be described later, the cylindrical battery 10 is structured such that a first electrode that constitutes the electrode assembly 14 is connected to the sealing assembly 17 and a second electrode that constitutes the electrode assembly 14 is connected to the outer housing can 16. In the present embodiment, the first electrode is a positive electrode 11 and the second electrode is a negative electrode 12.

The cylindrical battery 10 further comprises: a first conductive member 30 that is joined to a surface of the sealing assembly 17 on an outward side of the battery; a second conductive member 40 that is joined to an opening edge portion of the outer housing can 16; and an insulating member 50 that couples the first conductive member 30 and the second conductive member 40 to each other. The first conductive member 30 and the second conductive member 40 are, for example, conductive members to which leads that electrically connect a plurality of the cylindrical batteries 10 to each other are to be connected during modularization. For example, a metal plate or a metal wire can be used as the leads.

While the electrolyte may be an aqueous electrolyte, a non-aqueous electrolyte is to be used in the present embodiment. The non-aqueous electrolyte has lithium-ion conductivity. The non-aqueous electrolyte may be a liquid electrolyte (electrolytic solution) or a solid electrolyte.

The liquid electrolyte (electrolytic solution) contains a non-aqueous solvent and an electrolyte salt dissolved in the non-aqueous solvent. As the non-aqueous solvent, for example, esters, ethers, nitriles, amides, and mixtures of two or more of these substances are used. Examples of the non-aqueous solvent include ethylene carbonate (EC), ethyl methyl carbonate (EMC), dimethyl carbonate (DMC), diethyl carbonate (DEC), and a mixture of these solvents. The non-aqueous solvent may contain halogen substitutes (for example, fluoroethylene carbonate) in which at least some of the hydrogen of the solvents is replaced with halogen atoms such as fluorine. For example, lithium salts such as LiPF₆ are used as the electrolyte salts.

As the solid electrolyte, for example, a solid or gel polymer electrolyte, an inorganic solid electrolyte, and the like can be used. As the inorganic solid electrolyte, known materials used in all-solid-state lithium-ion secondary batteries and the like (for example, oxide-based solid electrolytes, sulfide-based solid electrolytes, and halogen-based solid electrolytes) can be used. A polymer electrolyte contains, for example, a lithium salt and a matrix polymer or a non-aqueous solvent, a lithium salt, and a matrix polymer. As the matrix polymer, for example, a polymer material that absorbs a non-aqueous solvent and becomes a gel is used. Examples of polymer materials include fluororesins, acrylic resins, and polyether resins.

The electrode assembly 14 includes the positive electrode 11, the negative electrode 12, and a separator 13 and has a wound structure in which the positive electrode 11 and the negative electrode 12 are wound in a spiral shape via the separator 13. The positive electrode 11, the negative electrode 12, and the separator 13 are all long, strip-like bodies which are wound in a spiral shape and stacked alternately in a radial direction of the electrode assembly 14. The negative electrode 12 is formed slightly larger than the positive electrode 11 in order to prevent lithium precipitation. In other words, the negative electrode 12 is formed longer than the positive electrode 11 in a longitudinal direction and a width direction. The separator 13 is formed slightly larger than at least the positive electrode 11 and, for example, two separators 13 are arranged so as to sandwich the positive electrode 11.

The electrode assembly 14 includes a positive electrode lead 20 connected to the positive electrode 11 and a negative electrode lead 21 connected to the negative electrode 12. In the example shown in FIG. 1, the positive electrode lead 20 extends through an opening portion of an insulating plate 18 to the sealing assembly 17, and the negative electrode lead 21 extends outside of an insulating plate 19 to a can bottom side of the outer housing can 16. Note that each of the positive electrode lead 20 and the negative electrode lead 21 may be provided in plurality.

The positive electrode 11 includes a positive electrode core and a positive electrode mixture layer formed on at least one surface of the core. As the positive electrode core, a foil of a metal that is stable in a potential range of the positive electrode 11 such as aluminum or an aluminum alloy or a film with the metal arranged on a surface layer can be used. The positive electrode mixture layer contains a positive electrode active material, a conductive agent such as acetylene black, and a binding agent such as polyvinylidene fluoride (PVdF) and is preferably formed on both surfaces of the positive electrode core. As the positive electrode active material, for example, a lithium transition metal composite oxide containing Ni, Co, Mn, Al, or the like is used. Note that the positive electrode lead 20 is preferably directly joined to the positive electrode core by ultrasonic welding or the like.

The negative electrode 12 includes a negative electrode core and a negative electrode mixture layer formed on at least one surface of the core. As the negative electrode core, a foil of a metal that is stable in a potential range of the negative electrode 12 such as copper or a copper alloy or a film with the metal arranged on a surface layer can be used. The negative electrode mixture layer contains a negative electrode active material and a binding agent such as styrene-butadiene rubber (SBR) and is preferably formed on both surfaces of the negative electrode core. For example, graphite, a Si-containing material, or the like is used as the negative electrode active material. The negative electrode lead 21 is preferably directly joined to the negative electrode core by ultrasonic welding or the like. Note that the negative electrode core can be brought into contact with an inner surface of the outer housing can 16 to electrically connect the negative electrode 12 and the outer housing can 16 to each other.

The outer housing can 16 is a bottomed cylindrical metal container with one end (upper end) in the axial direction opened and having a cylindrically formed side wall and a can bottom with a circular shape in a bottom view. While the outer housing can 16 is generally made of a metal containing iron as a principal component, the outer housing can 16 may also be made of a metal containing aluminum or the like as a principal component. A grooved portion 22 is annularly formed on the side wall of the outer housing can 16 along an entire length in a circumferential direction of the side wall. The grooved portion 22 is a portion of the side wall that projects to inside of the outer housing can 16 and is formed, for example, by spinning the side wall from the outside. The grooved portion 22 is formed at a position separated by a predetermined length from an upper end of the outer housing can 16. The predetermined length is, for example, a length corresponding to 1% to 20% of a length of the outer housing can 16 in the axial direction.

A gasket 26 is provided between the outer housing can 16 and the sealing assembly 17. The gasket 26 is a ring-like resin member to be mounted to an outer circumferential portion of the sealing assembly 17 to ensure insulation of the outer housing can 16 and the sealing assembly 17. In addition, the gasket 26 also seals a gap between the outer housing can 16 and the sealing assembly 17 to seal the interior of the battery. The gasket 26 is made of, for example, polyolefin.

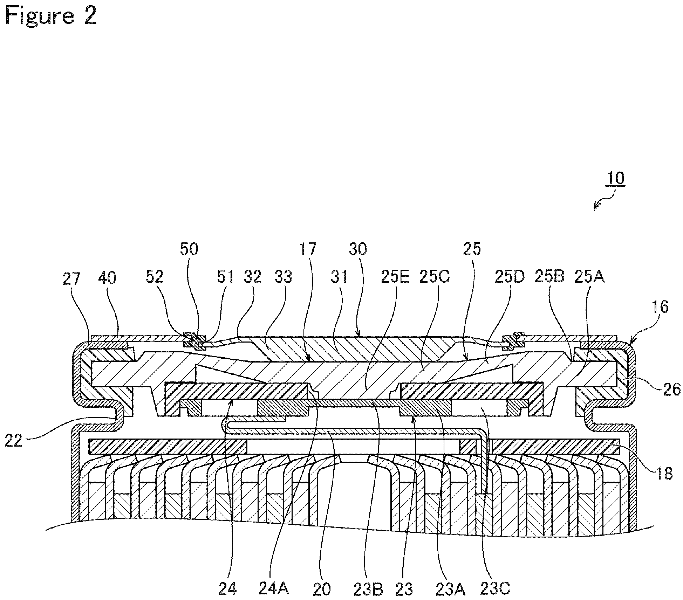

Hereinafter, the sealing assembly 17 will be described in detail with further reference to FIG. 2. FIG. 2 is an enlarged view of the sealing assembly 17 and a vicinity thereof of the cylindrical battery according to the present embodiment.

As shown in FIG. 2, the sealing assembly 17 is fixed to an opening edge portion of the outer housing can 16 by being sandwiched between the grooved portion 22 and a crimping portion 27. In the present embodiment, the crimping portion 27 is formed in an upper end portion of the outer housing can 16. The crimping portion 27 is a portion in which the upper end portion of the outer housing can 16 is bent toward the inside of the outer housing can 16 and is crimped with respect to the sealing assembly 17 arranged on the grooved portion 22. The crimping portion 27 is formed in an annular shape along the circumferential direction of the outer housing can 16.

The sealing assembly 17 is a disk-shaped member that seals the opening portion of the outer housing can 16 and functions as a current interruption mechanism and a safety valve. The sealing assembly 17 has a structure in which an internal terminal plate 23, an insulating plate 24, and a rupture plate 25 are stacked in order from a side of the electrode assembly 14. In the present embodiment, a height of an upper surface of the sealing assembly 17 at center in the radial direction is positioned on a side of the electrode assembly 14 (lower side) with respect to a height of an upper surface of the crimping portion 27.

The internal terminal plate 23 is a metal plate that includes a thick-walled annular portion 23A to which the positive electrode lead 20 is connected and a thin-walled central portion 23B that is detached from the annular portion 23A when internal pressure of the battery exceeds a predetermined threshold. A plurality of vent holes 23C are formed in the annular portion 23A.

The insulating plate 24 is a plate that insulates portions other than a connecting portion between the central portion 23B of the internal terminal plate 23 and a valve portion 25C of the rupture plate 25. An opening portion 24A is formed in the insulating plate 24 at center in the radial direction.

The rupture plate 25 is arranged opposite the internal terminal plate 23 across the insulating plate 24. The rupture plate 25 is fabricated by press working of, for example, a plate material made of aluminum or an aluminum alloy. The rupture plate 25 has an outer circumferential portion 25A that is supported by the grooved portion 22 of the outer housing can 16 and crimped and fixed by the crimping portion 27. A step 25B is formed on an upper surface of the outer circumferential portion and the valve portion 25C is formed on an inner side of the outer circumferential portion 25A in the radial direction.

The valve portion 25C functions as a safety valve that is ruptured when the internal pressure of the battery increases to discharge gas inside the battery. The valve portion 25C includes a thin-walled portion 25D that is inclined downward from outside to inside in the radial direction and of which thickness gradually decreases outward in the radial direction and a central portion 25E having a projection that projects toward the inside of the battery. The thin-walled portion 25D is formed in an annular shape in plan view or an arc shape in plan view. Forming the thin-walled portion 25D enables the thin-walled portion 25D to preferentially rupture when the internal pressure of the battery increases and facilitates reversal and rupture of the valve portion 25C. The projection of the central portion 25E is connected by welding or the like to the central portion 23B of the internal terminal plate 23 via the opening portion 24A of the insulating plate 24.

When an abnormality occurs in the battery and the internal pressure increases, generated gas pushes the rupture plate 25 upward, ruptures the internal terminal plate 23, and separates the central portion 23B from the annular portion 23A, and the valve portion 25C deforms so as to protrude toward the outside of the battery. Accordingly, a current path in the sealing assembly 17 is interrupted. When the internal pressure of the battery increases further after the interruption of the current path, the thin-walled portion 25D of the valve portion 25C ruptures and an exhaust port for gas is formed in the rupture plate 25.

In the present embodiment, the positive electrode lead 20 is connected to the lower surface of the internal terminal plate 23 by welding, ultrasonic welding, or the like. Therefore, the first conductive member 30 that is electrically connected to the internal terminal plate 23 becomes a positive electrode external terminal and a lead is welded to an upper surface of the first conductive member 30 during modularization. In addition, the negative electrode lead 21 is connected to an inner surface of the can bottom of the outer housing can 16 by welding, ultrasonic welding, or the like. Therefore, the second conductive member 40 that is electrically connected to the outer housing can 16 becomes a negative electrode external terminal and a lead is welded to an upper surface of the second conductive member 40 during modularization.

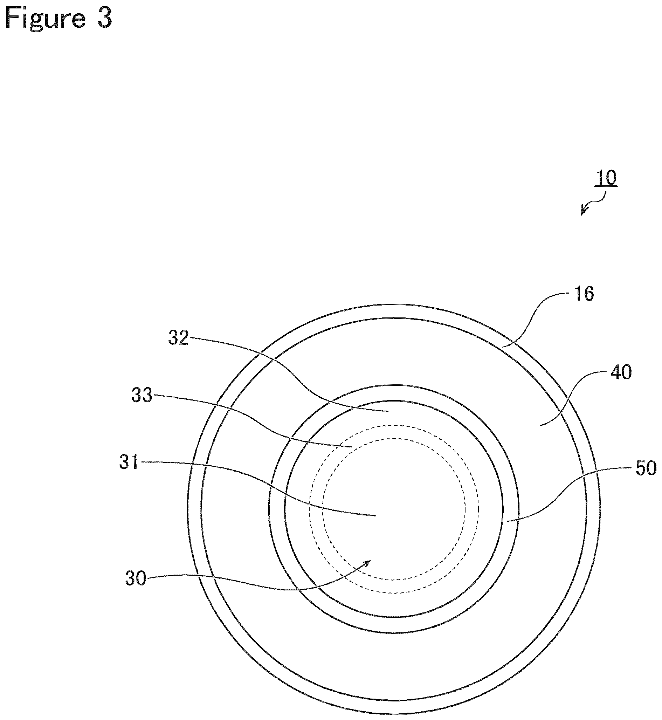

Hereinafter, configurations of the first conductive member 30, the second conductive member 40, and the insulating member 50 will be described in detail with further reference to FIG. 3. FIG. 3 is a plan view of the cylindrical battery 10. Note that in the present specification, lower surfaces of the first conductive member 30, the second conductive member 40, and the insulating member 50 mean surfaces facing the side of the electrode assembly 14 and upper surfaces mean surfaces facing the outside of the battery on an opposite side to the lower surfaces.

As shown in FIGS. 1 to 3, the cylindrical battery 10 comprises: the first conductive member 30 that is joined to the upper surface of the sealing assembly 17; the second conductive member 40 that is joined to the opening edge portion of the outer housing can 16; and the insulating member 50 that couples the first conductive member 30 and the second conductive member 40 to each other. As described above, the first conductive member 30 functions as a positive electrode external terminal and the second conductive member 40 functions as a negative electrode external terminal. In the cylindrical battery 10, the first conductive member 30 that functions as a positive electrode external terminal and the second conductive member 40 that functions as a negative electrode external terminal are both arranged on the upper surface of the cylindrical battery 10. Accordingly, since a lead can be connected to the positive electrode external terminal or the negative electrode external terminal arranged on the upper surface of the cylindrical battery 10 when modularizing the cylindrical battery 10, downsizing of modules, an improvement in productivity, and the like can be achieved. In addition, by coupling the first conductive member 30 and the second conductive member 40 to each other with the insulating member 50, assemblability of the first conductive member 30 and the second conductive member 40 to the upper surface of the cylindrical battery 10 can be improved.

As shown in FIGS. 2 and 3, the first conductive member 30 is a metal plate with a circular shape in plan view and arranged on the upper surface of the sealing assembly 17 so that a center of the first conductive member 30 in the radial direction overlaps with a center of the sealing assembly 17 in the radial direction. The first conductive member 30 and the sealing assembly 17 are laser-welded. The number and area of welded portions between the first conductive member 30 and the sealing assembly 17 are set in consideration of, for example, joint strength and resistance. In general, the larger the area of the welded portion or portions, the stronger the joint and the lower the resistance. In the present embodiment, a welded portion of the first conductive member 30 and the sealing assembly 17 is formed at one location at the center of the first conductive member 30 in the radial direction.

The first conductive member 30 has a thick-walled portion 31 and a thin-walled portion 32. The thick-walled portion 31 is a portion where the first conductive member 30 has maximum thickness and the thin-walled portion 32 is a portion where the first conductive member 30 has minimum thickness. In the present embodiment, an inclined portion 33 of which a thickness gradually decreases outward in the radial direction of the first conductive member 30 is formed between the thick-walled portion 31 and the thin-walled portion 32. In other words, the thick-walled portion 31, the inclined portion 33, and the thin-walled portion 32 are arranged in this order from the center of the first conductive member 30 in the radial direction.

The thick-walled portion 31 is a portion to which a lead is connected by laser welding when modularizing the cylindrical battery 10. The thick-walled portion 31 is formed in a region including the center of the first conductive member 30 in the radial direction in plan view. An upper surface of the thick-walled portion 31 preferably has a flat shape. Accordingly, a connection area when connecting a lead can be made as large as possible, thereby facilitating connection work when connecting a lead to the first conductive member 30. In addition, from the perspective of making the connection area when connecting a lead as large as possible, a diameter of the thick-walled portion 31 is preferably greater than or equal to 10% and even more preferably greater than or equal to 20% of an outer diameter of the outer housing can 16.

A thickness of the thick-walled portion 31 is preferably a thickness that enables the upper surface of the first conductive member 30 and the upper surface of the second conductive member 40 to be at a same height position. Accordingly, connection work when connecting leads to the first conductive member 30 and the second conductive member 40 can be facilitated and productivity can be improved.

The thin-walled portion 32 is formed in an annular shape along a circumferential edge of the inclined portion 33 in a predetermined length in the radial direction (hereinafter, sometimes referred to as a "width"). The thin-walled portion 32 is formed with a substantially constant width over the entire length of the first conductive member 30 in the circumferential direction. In the present embodiment, the thin-walled portion 32 has a region that is inclined with respect to the radial direction so that a distance between the thin-walled portion 32 and the upper surface of the sealing assembly 17 becomes shorter from inside to outside in the radial direction. In addition, the outer circumferential portion of the thin-walled portion 32 is inserted into a first groove 51 of the insulating member 50.

The thin-walled portion 32 preferentially deforms with a deformation of the valve portion 25C when the internal pressure of the battery increases. Accordingly, the current path of the sealing assembly 17 can be smoothly interrupted when the internal pressure of the battery increases. While the thin-walled portion 32 ruptures when the internal pressure of the battery further increases and before the valve portion 25C ruptures, a discharge path of the gas inside the battery is secured due to separation of the insulating member 50 from the first groove 51. While a thickness of the thin-walled portion 32 is not particularly limited as long as the safety function described above can be exhibited, for example, the thickness of the thin-walled portion 32 is less than or equal to the thickness of the thin-walled portion 25D formed in the valve portion 25C. In addition, the thin-walled portion 32 is preferably arranged so as to overlap with the thin-walled portion 25D formed in the valve portion 25C. Accordingly, the safety function described above can be more readily exhibited.

The inclined portion 33 is a portion of which a thickness gradually decreases outward in the radial direction, and a lower surface of the inclined portion 33 is gently inclined with respect to the radial direction of the first conductive member 30. In this case, since a change in the thickness of the first conductive member 30 is gradual and a staircase-like step is not formed between the thick-walled portion 31 and the thin-walled portion 32, a load bearing capacity of the first conductive member 30 improves.

As shown in FIGS. 2 and 3, the second conductive member 40 is a metal plate with an annular shape in plan view and the outside of the second conductive member 40 in the radial direction is joined to the opening edge portion of the outer housing can 16. A length of the second conductive member 40 in the radial direction is substantially constant over the entire length of the second conductive member 40 in the circumferential direction. In addition, an inner circumferential portion of the second conductive member 40 is inserted into a second groove 52 of the insulating member 50.

The second conductive member 40 is arranged in the opening edge portion of the outer housing can 16 in a state where the second conductive member 40 does not project more outward in the radial direction than the outer circumferential surface of the outer housing can 16. In this case, the cylindrical battery 10 can be downsized and the second conductive member 40 can be prevented from interfering with peripheral members in a battery module. An outer diameter of the second conductive member 40 is smaller than an outer diameter of the outer housing can 16 and the second conductive member 40 is arranged so as not to extend beyond the upper surface of the cylindrical battery 10. In addition, the second conductive member 40 is preferably arranged more outward in the radial direction than the thin-walled portion 25D formed in the valve portion 25C. In this case, when the internal pressure of the battery increases, the second conductive member 40 can be prevented from inhibiting deformation and rupture of the valve portion 25C.

A thickness of the second conductive member 40 is preferably less than or equal to a thickness of a portion of the outer housing can 16 to which the second conductive member 40 is to be joined. While the second conductive member 40 and the outer housing can 16 are to be laser-welded, setting the thickness of the second conductive member 40 less than or equal to the thickness of the outer housing can 16 enables laser output to be suppressed and enables occurrence of sputtering and a thermal effect on the gasket 26 to be effectively suppressed. In the present embodiment, the second conductive member 40 is laser-welded to the crimping portion 27 of the outer housing can 16. An example of a ratio of the thickness of the second conductive member 40 to the thickness of the crimping portion 27 is 0.5 times to 0.8 times. A welding portion between the second conductive member 40 and the crimping portion 27 may be formed in plurality intermittently at a predetermined interval or formed continuously in the circumferential direction of the second conductive member 40.

The first conductive member 30 and the second conductive member 40 are constituted of a metal containing any of aluminum, iron, and nickel as a principal component. When the first conductive member 30 functions as a positive electrode external terminal, the first conductive member 30 can be constituted of aluminum. For example, the first conductive member 30 can be fabricated by forging. In addition, when the second conductive member 40 functions as a negative electrode external terminal, the second conductive member 40 can be constituted of stainless steel. For example, the second conductive member 40 can be fabricated by subjecting a metal plate to press working.

As shown in FIGS. 2 and 3, the insulating member 50 is a member with an annular shape in plan view and is arranged between the first conductive member 30 and the second conductive member 40. For example, the insulating member 50 may be constituted of a similar resin to the gasket 26 such as polyolefin or a resin with a higher heat resistance than the gasket 26 such as ethylene tetrafluoride/perfluoroalkoxyethylene copolymer (PFA) and other fluororesins.

The insulating member 50 has the first groove 51 and the second groove 52. The first groove 51 is a recessed portion into which the outer circumferential portion of the thin-walled portion 32 of the first conductive member 30 is inserted and is annularly formed in an inner circumferential portion of the insulating member 50. In addition, the second groove 52 is a recessed portion into which the inner circumferential portion of the second conductive member 40 is inserted and is annularly formed in an outer circumferential portion of the insulating member 50. Coupling the first conductive member 30 and the second conductive member 40 to each other with the insulating member 50 enables assemblability of the first conductive member 30 and the second conductive member 40 to the upper surface of the cylindrical battery 10 to be improved while ensuring insulation between the first conductive member 30 and the second conductive member 40.

The first groove 51 and the second groove 52 are formed with widths and depths that allow insertion of the first conductive member 30 and the second conductive member 40. In the present embodiment, since the thickness of the thin-walled portion 32 of the first conductive member 30 and the thickness of the second conductive member 40 are the same, the first groove 51 and the second groove 52 are formed with the same width and depth. In addition, in the present embodiment, the first groove 51 is formed more to the side of the electrode assembly 14 (lower side) than the second groove 52.

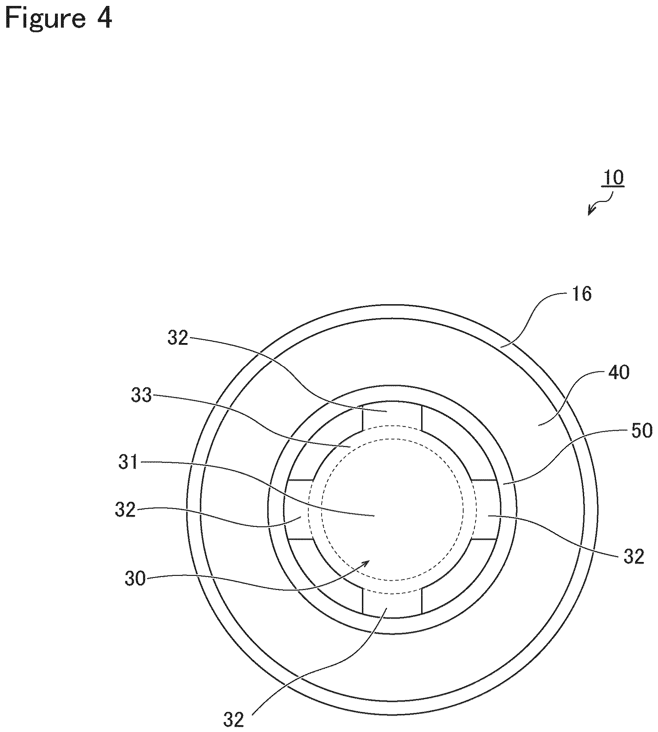

FIG. 4 shows a modification of the first conductive member 30. FIG. 4 is a plan view of the cylindrical battery 10.

The first conductive member 30 shown in FIG. 4 shares a feature with the first conductive member 30 shown in FIG. 3 in that the first conductive member 30 has the thick-walled portion 31, the thin-walled portion 32, and the inclined portion 33. On the other hand, the first conductive member 30 shown in FIG. 4 differs from the first conductive member 30 shown in FIG. 3 in that the thin-walled portion 32 is not formed around a whole circumference of the first conductive member 30 and that four thin-walled portions 32 are formed at equal intervals in the circumferential direction. By not forming the thin-walled portion 32 around the whole circumference of the first conductive member 30 and forming thin-walled portions 32 at intervals, the thin-walled portions 32 more readily deform or rupture when strength of the thin-walled portions 32 decline, the internal pressure of the battery increases, and the valve portion 25C ruptures. Accordingly, safety functions such as a current interruption function and a gas discharge function are exhibited smoothly. Note that the number of thin-walled portions 32 may be less than four or greater than or equal to five. In addition, as shown in FIG. 4, when forming a plurality of thin-walled portions 32, the first groove 51 of the insulating member 50 may only be formed at locations corresponding to the thin-walled portions 32.

As described above, the cylindrical battery 10 comprises: the first conductive member 30 that is joined to the upper surface of the sealing assembly 17; the second conductive member 40 that is joined to the opening edge portion of the outer housing can 16; and the insulating member 50 that couples the first conductive member 30 and the second conductive member 40 to each other. Providing the second conductive member 40 enables a welding area of leads to be secured without lengthening the crimping portion 27 and a stable connection of the leads can be realized while suppressing deformation of the sealing assembly 17. In addition, by providing the first conductive member 30 and bringing the height of the first conductive member 30 that functions as the positive electrode external terminal and the height of the second conductive member 40 that functions as the negative electrode external terminal closer to each other or making the heights the same, connection work when connecting leads to the first conductive member 30 and the second conductive member 40 is facilitated and productivity is improved.

Note that a design of the embodiment described above can be appropriately modified without impairing the object of the present disclosure. For example, while the thick-walled portion 31 of the first conductive member 30 has a circular shape in plan view in the embodiment and the modification described above, the thick-walled portion 31 is not limited thereto. For example, the thick-walled portion 31 may have an approximately polygonal shape in plan view.

In addition, while the second conductive member 40 formed in an annular shape in plan view is exemplified in the embodiment and the modification described above, the second conductive member 40 may be a metal plate with an arc shape in plan view. The planar shape of the insulating member 50 may similarly be formed in an arc shape in plan view. When using the second conductive member 40 with an arc shape in plan view, a length of the arc along an outer circumferential edge of the second conductive member 40 is preferably greater than or equal to 25% of a circumferential length corresponding to the arc and more preferably greater than or equal to 50% of the circumferential length corresponding to the arc. In this case, the second conductive member 40 can be readily arranged on the upper surface of the cylindrical battery 10 in a stable manner. In addition, the second conductive member 40 may be a metal plate with a shape other than an annular shape in plan view or an arc shape in plan view. Even in this case, the second conductive member 40 is preferably arranged in a state where the second conductive member 40 does not project more outward in the radial direction than the outer circumferential surface of the outer housing can 16.

Furthermore, while a case where the first conductive member 30 functions as a positive electrode external terminal and the second conductive member 40 functions as a negative electrode external terminal has been exemplified in the embodiment and the modification described above, a mode in which the second conductive member 40 acts as the positive electrode external terminal and the first conductive member 30 acts as the negative electrode external terminal can also be adopted. In other words, the first electrode described above can be made the negative electrode 12 and the second electrode described above can be made the positive electrode 11.

The present disclosure is further illustrated by the following embodiments.

Configuration 1: A cylindrical battery, comprising: an electrode assembly including a first electrode and a second electrode; a bottomed cylindrical outer housing can that houses the electrode assembly; and a sealing assembly that seals an opening portion of the outer housing can, wherein the first electrode is electrically connected to the sealing assembly and the second electrode is electrically connected to the outer housing can, and the cylindrical battery further comprises a first conductive member that is joined to a surface of the sealing assembly on an outward side of the battery, a second conductive member that is joined to an opening edge portion of the outer housing can, and an insulating member that couples the first conductive member and the second conductive member to each other.

Configuration 2: The cylindrical battery according to configuration 1, wherein the sealing assembly has a thin-walled portion with an annular shape in plan view or an arc shape in plan view, and the second conductive member is arranged more outward in a radial direction than the thin-walled portion.

Configuration 3: The cylindrical battery according to configuration 1 or 2, wherein the second conductive member is arranged in a state where the second conductive member does not project more outward in the radial direction than an outer circumferential surface of the outer housing can.

Configuration 4: The cylindrical battery according to any one of configurations 1 to 3, wherein the second conductive member has an annular shape in plan view or an arc shape in plan view.

Configuration 5: The cylindrical battery according to any one of configurations 1 to 4, wherein a surface of the first conductive member on an outward side of the battery and a surface of the second conductive member on an outward side of the battery are arranged at a same height position.

Configuration 6: The cylindrical battery according to any one of configurations 1 to 5, wherein the insulating member has a first groove into which the first conductive member is to be inserted and a second groove into which the second conductive member is to be inserted.

Configuration 7: The cylindrical battery according to any one of configurations 1 to 6, wherein the first conductive member and the second conductive member are constituted of a metal containing any of aluminum, iron, and nickel as a principal component.

Configuration 8: The cylindrical battery according to any one of configurations 1 to 7, wherein the first electrode is a positive electrode and the second electrode is a negative electrode.

### REFERENCE SIGNS LIST

10 Cylindrical battery, 11 Positive electrode, 12 Negative electrode, 13 Separator, 14 Electrode assembly, 16 Outer housing can, 17 Sealing assembly, 18, 19 Insulating plate, 20 Positive electrode lead, 21 Negative electrode lead, 22 Grooved portion, 23 Internal terminal plate, 23A Annular portion, 23B Central portion, 23C Vent hole, 24 Insulating plate, 24A Opening portion, 25 Rupture plate, 25A Outer circumferential portion, 25B Step, 25C Valve portion, 25D Thin-walled portion, 25E Central portion, 26 Gasket, 27 Crimping portion, 30 First conductive member, 31 Thick-walled portion, 32 Thin-walled portion, 33 Inclined portion, 40 Second conductive member, 50 Insulating member, 51 First groove, 52 Second groove

## Claims

1. A cylindrical battery, comprising:
an electrode assembly including a first electrode and a second electrode;
a bottomed cylindrical outer housing can that houses the electrode assembly; and
a sealing assembly that seals an opening portion of the outer housing can, wherein
the first electrode is electrically connected to the sealing assembly and the second electrode is electrically connected to the outer housing can, and
the cylindrical battery further comprises a first conductive member that is joined to a surface of the sealing assembly on an outward side of the battery,
a second conductive member that is joined to an opening edge portion of the outer housing can, and
an insulating member that couples the first conductive member and the second conductive member to each other.

2. The cylindrical battery according to claim 1, wherein
the sealing assembly has a thin-walled portion with an annular shape in plan view or an arc shape in plan view, and
the second conductive member is arranged more outward in a radial direction than the thin-walled portion.

3. The cylindrical battery according to claim 1, wherein the second conductive member is arranged in a state where the second conductive member does not project more outward in the radial direction than an outer circumferential surface of the outer housing can.

4. The cylindrical battery according to claim 1, wherein the second conductive member has an annular shape in plan view or an arc shape in plan view.

5. The cylindrical battery according to claim 1, wherein a surface of the first conductive member on an outward side of the battery and a surface of the second conductive member on an outward side of the battery are arranged at a same height position.

6. The cylindrical battery according to claim 1, wherein the insulating member has a first groove into which the first conductive member is to be inserted and a second groove into which the second conductive member is to be inserted.

7. The cylindrical battery according to claim 1, wherein the first conductive member and the second conductive member are constituted of a metal containing any of aluminum, iron, and nickel as a principal component.

8. The cylindrical battery according to claim 1, wherein the first electrode is a positive electrode and the second electrode is a negative electrode.
